# EUROPÄISCHE PATENTSCHRIFT

(11) **EP 2 945 763 B1**
(45) Veröffentlichungstag und Bekanntmachung des Hinweises auf die Patenterteilung: **30.09.2020**
(21) Anmeldenummer: 13811349.3
(22) Anmeldetag: 20.11.2013
(51) Int. Cl.: B22F 3/105, B29C 64/153, B29C 64/35, B29C 64/357, B33Y 30/00

(54) **VORRICHTUNG ZUM HERSTELLEN VON DREIDIMENSIONALEN OBJEKTEN**
DEVICE FOR PRODUCING THREE-DIMENSIONAL OBJECTS
DISPOSITIF DE CONSTRUCTION D'OBJETS TRIDIMENSIONNELS

(30) Priorität: 15.01.2013 DE 102013000511
(43) Veröffentlichungstag der Anmeldung: 25.11.2015
(60) Teilanmeldung: 20191267.2
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/DE2013/000686
(87) Internationale Veröffentlichungsnummer: WO 2014/111072

(56) Entgegenhaltungen:
- EP-A1- 1 316 408
- EP-A1- 1 514 622
- EP-A2- 1 700 686
- DE-A1-102007 029 052
- DE-A1-102011 088 158
- DE-U1- 20 107 262
- US-B1- 6 401 001

## Beschreibung

Die Erfindung betrifft eine Vorrichtung zum Herstellen von dreidimensionalen Objekten gemäß den Merkmalen des Oberbegriffs des Anspruchs 1. Derartige Vorrichtungen sind unter dem Namen Lasersintereinrichtung (SLS) oder Laserschmelzeinrichtung (SLM) bekannt. Das pulverförmige Aufbaumaterial wird in einer Dosierkammer bevorratet, durch eine Aufbringvorrichtung schichtweise in die Baukammer verbracht und die jeweils oberste Schicht Aufbaumaterial in der Baukammer wird durch eine Bestrahlungseinrichtung an vorgegebenen Stellen verfestigt.

Aus DE 10 2007 018 601 A1 ist es bekannt, innerhalb der Vorrichtung eine Fördereinrichtung zum Transport des Aufbaumaterials von einem oder mehreren Vorratsbehältern zur Dosierkammer vorzusehen.

Nicht in DE 10 2007 018 601 A1 gezeigt, aber allgemein bekannt, ist es, dass das Aufbaumaterial vor dem Verfestigen beheizt werden kann. Hierfür sind Heizvorrichtungen unterhalb, oberhalb oder seitlich der Baukammer vorzusehen.

Die Heizvorrichtungen und auch andere Vorrichtungen zur Behandlung oder Kontrolle des Aufbaumaterials sind dabei so auszulegen, dass sie für alle in der Lasersinter- oder Laserschmelzanlage verarbeiteten Aufbaumaterialien geeignet sind.

DE 201 07 262 U1 offenbart eine Vorrichtung zum Herstellen eines dreidimensionalen Objekts vermittels SLS, mit der die Herstellung von Kleinst- bzw. auch Kleinserien auf eine kostengünstige Weise möglich ist. Die Vorrichtung umfasst außerhalb der Lasersinteranlage einen Vorratsbehälter in dem das aufzubringende Pulvermaterial in größeren Mengen gespeichert ist, und innerhalb der Lasersinteranlage einen Dosierbehälter, der oberhalb des Beschichters in dessen Endstellung angeordnet ist, zum Dosieren und Bereitstellen des Pulvers für die aufzubringende Schicht. Pulver, welches nicht verwendet wird, wird mittels Förderelementen in einem Kreislauf zum Vorratsbehälter zurückgeführt. In einer Weiterbildung sind mehrere Pulveraufbereitungsanlagen wahlweise an der Lasersinteranlage verbindbar.

EP 1514622 und EP 1700686 offenbaren alternative SLS-Anlagen mit einem Pulverkreislauf.

Der Erfindung liegt die Aufgabe zugrunde, eine Vorrichtung zum Herstellen von dreidimensionalen Objekten mit den Merkmalen des Oberbegriffs des Anspruchs 1 derart weiterzubilden, dass die Handhabung und Kontrolle des Aufbaumaterials verbessert ist. Diese Aufgabe wird durch die Merkmale des Anspruchs 1 gelöst, vorteilhafte Weiterbildungen der Erfindung ergeben sich aus den Unteransprüchen.

Als Kern der Erfindung wird es angesehen, dass zumindest ein Förderelement des Aufbaumaterialtransportkreislaufes, nämlich die Zuleitungen zu den Dosierkammern oder der Dosierkammer, derart redundant ausgelegt wird, dass für wenigstens ein Aufbaumaterial ein eigener Kreislauf oder Teilkreislauf vorhanden ist und für ein oder mehrere andere Aufbaumaterialien ein zweiter oder mehr Teilkreisläufe. Dadurch werden zwei Vorteile realisiert. Da die Förderelemente für dieses eine Aufbaumaterial nicht mehr ausgetauscht oder gereinigt werden müssen, werden Verunreinigungen des Aufbaumaterials auf dem Transportweg vermieden. Zum anderen wird zusätzlich der Umbau- und Reinigungsaufwand verringert, da die Förderelemente wenigstens eines Aufbaumaterials nicht mehr gewechselt werden müssen.

Hinsichtlich einer redundanten Ausführung sind zwei Hauptausgestaltungen möglich.

Zum Einen können alle Elemente eines Transportkreislaufes redundant ausgelegt werden. Dann sind für ein erstes Aufbaumaterial eine eigene Dosierkammer, Vorratskammer, Fördereinrichtung, Überlaufkammer und diese verbindende Leitungen bzw. Schläuche vorzusehen. Je nach Aufbau können einzelne Elemente weggelassen oder hinzugefügt werden, wobei sich das Weglassen oder Hinzufügen durch den grundsätzlichen Aufbau einer Lasersinter- oder Laserschmelzvorrichtung ergibt.

In einer Alternative sind lediglich die Förderelemente, also die Leitungen bzw. Schläuche, redundant ausgelegt, während die Dosierkammer, Überlaufkammer, Fördereinrichtung und Pulverrückgewinnungseinrichtung auszutauschen oder zu reinigen sind. Die Elemente eines Pulverkreislaufs, die keine Förderelemente sind, werden im Folgenden Aufbaumaterialvorratskammern oder Pulvervorratskammern genannt. Der Austausch und/oder die Reinigung der Pulvervorratskammern ist dabei erheblich einfacher als der komplette Austausch eines kompletten Transportkreislaufs, der zusätzlich die Förderelemente umfasst. Durch die Austauschbarkeit oder die Reinigung der Pulvervorratskammern wird eine kompakte Bauweise der Lasersinter- oder Laserschmelzvorrichtungen beibehalten.

Andererseits ist es aufgrund der Entwicklung von Nachfüllvorrichtungen möglich geworden, beispielsweise die Dosierkammern erheblich zu verkleinern. Gleiches gilt für die Überlaufkammern, die mit einer Ableitung versehen werden und daher ständig entleert werden können. Es ist daher möglich, auch ohne wesentliche Vergrößerung der Gesamtfläche oder des Gesamtvolumens der Lasersinter- oder Laserschmelzanlage auch die Pulvervorratskammern zumindest teilweise redundant auszuführen. Redundanz bedeutet, dass für einen Transportschritt des Aufbaumaterials, beispielsweise den Transport von einer Nachfüllkammer zu einer Dosierkammer, zwei oder mehr Transport- bzw. Förderelemente vorhanden sind.

Vorteilhafterweise können an wenigstens einem Förderelement eine Sensorvorrichtung und/oder eine Aufbaumaterialbehandlungseinrichtung angeordnet sein. Da wenigstens ein Förderelement genau einem Aufbaumaterial zugeordnet ist, können an diesem Förderelement aufbaumaterialspezifische Sensoreinrichtungen und/oder Aufbaumaterialbehandlungseinrichtungen angeordnet sein. Dabei kann es sich um Heizvorrichtungen, Kühleinrichtungen, Temperatursensoren, Drucksensoren oder auch Restsauerstoffsensoren handeln. Diese können in Abhängigkeit der Dichte des Aufbaumaterials, seines Transportverhaltens, seiner elektrischen oder Wärmeleitfähigkeit optimiert werden.

Weiterhin ist es möglich, die Form und/oder das Material und/oder die Innenbeschichtung des Förderelements auf das Aufbaumaterial abzustimmen. Wird durch ein Förderelement beispielsweise Aluminiumpulver transportiert, so muss dieses einem größeren Gewicht standhalten als bei einem Transport eines Kunststoffpulvers. Auch kann vorgesehen sein, den Querschnitt eines Förderelements zu vergrößern, wenn das darin transportierte Pulver eine höhere Neigung zum Verklumpen aufweist als andere Pulver.

Auch bei der Ableitung des Aufbaumaterials ergibt sich bei einer redundanten Anordnung von Ableitungen Optimierungspotential. Beispielsweise kann zwischen einer Überlaufkammer und einer Pulverrückgewinnungseinrichtung ein Förderelement vorgesehen werden, in dem ein für das zu transportierende Aufbaumaterial optimierter Filter eingesetzt ist. Dieser Filter kann stattdessen oder zusätzlich auch in der Pulverrückgewinnungseinrichtung verwendet werden.

Die Erfindung wird anhand von Ausführungsbeispielen in den Zeichnungsfiguren näher erläutert. Diese zeigen in:
- Fig. 1: eine Vorrichtung mit geschlossenen Pulverkreisläufen,
- Fig. 2: verdrehbare Dosier- und Überlaufkammern,
- Fig. 3: eine Vorrichtung mit austauschbaren Pulvervorratskammern und
- Fig. 4: Anschlusselemente.

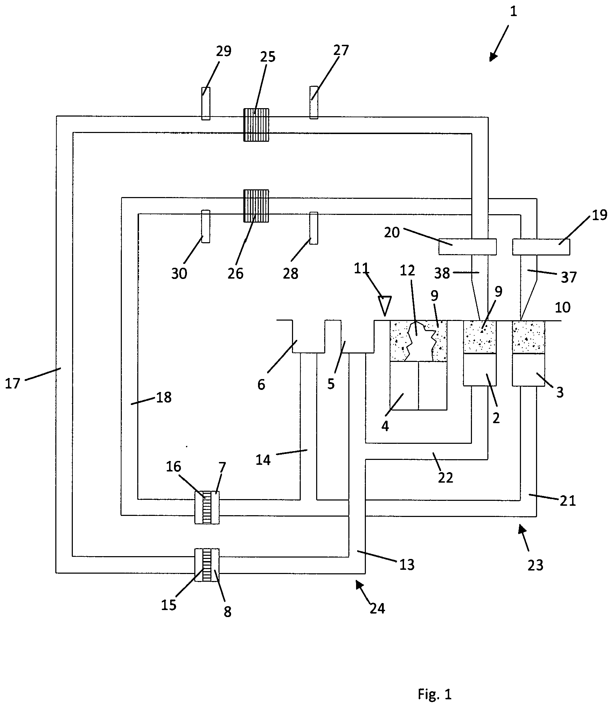

Fig. 1 zeigt eine Lasersintervorrichtung 1 mit Dosierkammern 2 und 3, einer Baukammer 4, Überlaufkammern 5 und 6 sowie Pulverrückgewinnungseinrichtungen 7 und 8. In den Dosierkammern 2 und 3 werden unterschiedliche Aufbaumaterialien 9 und 10 bevorratet. Durch die Aufbringvorrichtung 11 wird das Aufbaumaterial 9 von der Dosierkammer 2, die der Baukammer 4 am nächsten gelegen ist, zur Baukammer 4 transportiert. Die jeweils oberste Schicht Aufbaumaterial 9 in der Baukammer 4 wird mit einer nicht dargestellten Bestrahlungseinrichtung an den gewünschten Stellen zur Herstellung eines dreidimensionalen Objekts 12 verfestigt. Das für die Baukammer 4 überschüssige Aufbaumaterial 9 wird in der Überlaufkammer 5 aufgefangen. Auch die Überlaufkammer 5 ist diejenige Überlaufkammer, die der Baukammer 4 am nächsten liegt. Von den Überlaufkammern 5 und 6 führen Ableitungen 13 und 14 zu den Pulverrückgewinnungseinrichtungen 7 und 8. Die Ableitungen 13 und 14 sind Schläuche, die von den Überlaufkammern 5 und 6 zu den Pulverrückgewinnungseinrichtungen 7 und 8 führen, durch die das Aufbaumaterial 9 bzw. 10 transportiert wird und die dementsprechend als Förderelemente dienen. In den Pulverrückgewinnungseinrichtungen 7 und 8 befinden sich aufbaumaterialspezifische Filter 15 und 16. Besteht das Aufbaumaterial 9 aus Pulverkörnern mit einem vergleichsweise geringen Durchschnitts-Korndurchmesser, so kann die Porengröße des Filters 15 so an das Aufbaumaterial angepasst werden, dass lediglich einzelne Körner und keine zusammenklebenden Körner durchgelassen werden. Da der Korndurchmesser unterschiedlicher Aufbaumaterialien 9 oder auch bei einem einzigen Aufbaumaterial 9 bzw. 10 je nach Anwendungszweck stark variieren kann, kann durch aufbaumaterialspezifische Filter 15 und 16 eine Optimierung der Rückgewinnung des Aufbaumaterials 9 bzw. 10 gewährleistet werden. Aufbaumaterialspezifische Filter 15 und 16 sind also Filter, die in wenigstens einer Größe, bspw. dem Filtermaterial, der Porengröße, etc. an ein bestimmtes Aufbaumaterial 9 bzw. 10 angepasst sind.

Unter unterschiedlichen Aufbaumaterialien 9 bzw. 10 werden in dem vorliegenden Dokument Aufbaumaterialien aus unterschiedlichen Materialien verstanden, beispielsweise aus Aluminium oder Platin, es werden aber auch Aufbaumaterialien 9 bzw. 10 aus dem gleichen Material, aber verschiedenen Durchschnittskorndurchmessern verstanden. Beispielsweise zeigt Aluminium bei einem Durchschnittskorndurchmesser von 10 µm ein teilweise anderes Verhalten als Aluminium mit einem Durchschnittskorndurchmesser von 20 µm.

Die entsprechenden Saugvorrichtungen zum Absaugen des Aufbaumaterials 9 bzw. 10 aus den Überlaufkammern 5 und 6 sind nicht dargestellt, aber bekannt.

Von den Pulverrückgewinnungseinrichtungen 7 und 8 führen dann Leitungen 17 und 18 zu Nachfüllvorrichtungen 19 und 20. Mit der Nachfüllvorrichtung 19 wird über die Zuleitung 37 die Dosierkammer 3 nachgefüllt und mittels der Nachfüllvorrichtung 20 über die Zuleitung 38 die Dosierkammer 2. Um nach dem Bauvorgang überschüssiges Aufbaumaterial 9 bzw. 10 aus den Dosierkammern 2 und 3 zurückzuführen, sind entsprechende Ableitungen 21 und 22 vorgesehen, die auch zu den Pulverrückgewinnungseinrichtungen 7 und 8 führen.

Die Lasersintereinrichtung 1 verfügt so über einen geschlossenen Pulverkreislauf 24 für das Aufbaumaterial 9, bestehend aus der Dosierkammer 2, der Ableitung 22, der Überlaufkammer 5, der Ableitung 13, der Pulverrückgewinnungseinrichtung 8 mit Filter 15 und der Leitung 17.

Entsprechende Vorrichtungen mit den Bezugszeichen 3, 21, 6, 14, 7, 16, 18 und 19 sind für das Aufbaumaterial 10 ebenfalls vorhanden und bilden den Pulverkreislauf 23. Diese geschlossenen Pulverkreisläufe 23 und 24 bieten mehrere Vorteile.

Da nach dem Bauvorgang lediglich die Baukammer 4 aus der Lasersintervorrichtung 1 entnommen wird, kommt es innerhalb der geschlossenen Pulverkreisläufe 23 und 24 zu keinerlei Kontaminationen mehr. Weiterhin können die Ableitungen 13 und 22 sowie die Leitung 17 speziell an die Eigenschaften des Aufbaumaterials 9 angepasst werden. Ebenso können die entsprechenden Leitungen des Pulverkreislaufes 23 an das Aufbaumaterial 10 angepasst werden. Zusätzlich ist es möglich, für jedes Aufbaumaterial 9 oder 10 jeweils optimierte Heizvorrichtungen 25 und 26 oder Temperatursensoren 27 oder Restsauerstoffsensoren 29 und 30 anzubringen. Allgemeiner formuliert können aufgrund der redundanten Auslegung wenigstens zweier Förderelemente beliebige Sensoreinrichtungen und/oder Aufbaumaterialbehandlungseinrichtungen an einem Förderelement angebracht werden, die aufbaumaterialoptimiert sind. Unter einer redundanten Auslegung wird dabei im allgemeinsten Sinne verstanden, dass wenigstens ein Förderelement von der Funktion her gesehen, doppelt vorhanden ist, dass also eine Zuleitung zu einer Dosierkammer 2 oder 3 oder einer Ableitung 21, 22 bzw. 13 und 14 doppelt vorhanden ist, so dass zumindest für ein Aufbaumaterial 9 bzw. 10 ein eigenes Förderelement vorliegt. Je nach Einsatzart und Verwendungszweck der in einer Lasersintereinrichtung verwendeten Aufbaumaterialien ist das am meisten verwendete Aufbaumaterial 9 bzw. 10 oder die meisten verwendeten Aufbaumaterialien mit eigenen Zu- und Ableitungen zu versehen, während seltener genutzte Aufbaumaterialien 9 bzw. 10 einen eigenen Pulverkreislauf erhalten. In diesem Pulverkreislauf sind dann die Förderelemente jeweils auszuwechseln, was im Hinblick auf die seltene Verwendung nicht mehr so stark ins Gewicht fällt.

Es ist also nicht nötig, dass für jedes einzelne in einer Lasersintervorrichtung 1 verwendete Aufbaumaterial 9 bzw. 10 ein eigener Pulverkreislauf 23, 24 installiert wird, es ist vielmehr ausreichend, diese für die hauptsächlich verwendeten Pulver vorzusehen.

Dabei ist es auch möglich, zwei oder mehr Aufbaumaterialien 9 bzw. 10 durch einen einzigen Pulverkreislauf 23, 24 laufen zu lassen, sofern diese ähnlich genug sind. Unterscheiden sich zwei Aufbaumaterialien 9 bzw. 10, wie es oben definiert wurde, lediglich geringfügig in ihrem durchschnittlichen Korndurchmesser, beispielsweise 12 und 15 µm, so ist es möglich, diese beiden Aufbaumaterialien 9 bzw. 10 in einem einzigen Pulverkreislauf, beispielsweise dem Pulverkreislauf 23 zu verwenden. Mögliche Restrückstände des einen Aufbaumaterials 9 bzw. 10 in einem Förderelement oder einer Pulvervorratskammer führen dann nämlich zu keiner Kontamination des anderen Aufbaumaterials 9 bzw. 10, sondern allenfalls zu einer nicht merklichen Erhöhung oder Absenkung der durchschnittlichen Korngröße.

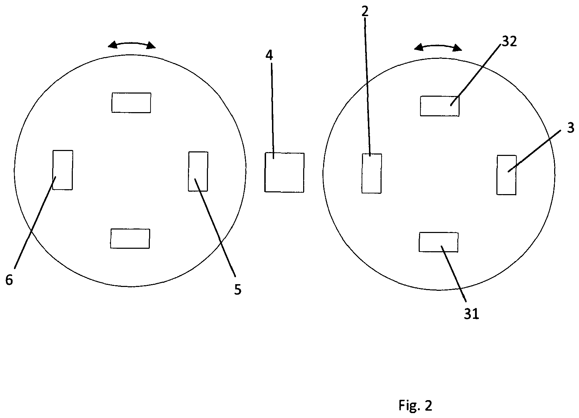

Fig. 2 zeigt eine mögliche Anordnung von Dosierkammern 2, 3, 31, 32 und Überlaufkammern 5, 6 um eine Baukammer 4 herum. Die Dosierkammern 2, 3, 31 und 32 sind dabei drehbar auf einem Drehtisch gelagert, so dass jeweils eine der Dosierkammern 2, 3, 31 oder 32 in die Nähe der Baukammer 4 gebracht werden kann. Mögliche Ableitungen unterhalb der Dosierkammern 2, 3, 31 und 32 weisen dementsprechend beispielsweise einen Balg auf, so dass sie eine gewisse Längenverstellbarkeit bieten. Die Verdrehbarkeit des die Dosierkammern 2, 3, 31 und 32 aufweisenden Drehtischs ist eingeschränkt, so dass die Ableitungen nicht so stark verdrillt werden oder gar reißen. Auf diese Art und Weise lassen sich vier getrennte Pulverkreisläufe realisieren. Die Anordnung, bspw. der Aufbringvorrichtung 11 kann also konstant bleiben, nur die Dosierkammer 2, 3, 31, 32 wird jeweils zum Wechseln des Aufbaumaterials verschoben.

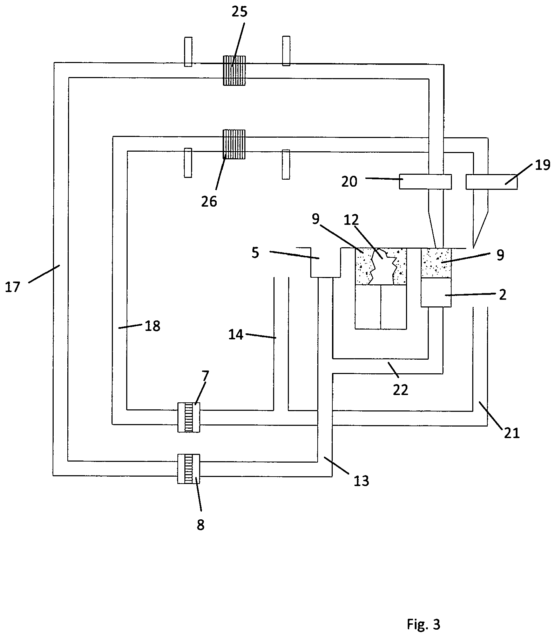

Fig. 3 zeigt einen von Fig. 1 leicht abweichenden Aufbau, bei dem jeweils lediglich eine Dosierkammer 2 und eine Überlaufkammer 5 vorhanden sind. Wird mit dem Aufbaumaterial 9 gebaut, so befinden sich die Ableitung 13, die Pulverrückgewinnungseinrichtung 8 mit Filter 15, die Leitung 17, usw., also die Förderelemente des Pulverkreislaufes 23 gemäß Fig. 1 im Einsatz. Bei einem Wechsel des Aufbaumaterials, beispielsweise zum Aufbaumaterial 10, müssten die Überlaufkammer 5 und die Dosierkammer 2 entleert und gereinigt werden. Die Dosierkammer 2 und die Überlaufkammer 5 können wie die Baukammer 4 auch vollständig entnommen werden. Insbesondere ist es möglich, die Dosierkammer 2, die Baukammer 4 und die Überlaufkammer 5 in einem Baumodul zu vereinen, das dann als ganzes entnehmbar ist. Insbesondere ist es möglich, für jedes Aufbaumaterial 9 bzw. 10 ein eigenes Baumodul vorzusehen. Dann sind nur noch die Leitungen 17 und 18, oder 21, 22, 13 und 14 an die jeweiligen Anschlüsse der Dosierkammer 2 oder Überlaufkammer 5 eines Baumoduls anzuschließen. Ein Wechsel von Förderelementen in Form von Zuleitungen oder Ableitungen ist nur noch nötig, wenn ein Pulverkreislauf, der für selten anfallende Pulver vorgesehen ist, ausgetauscht werden muss.

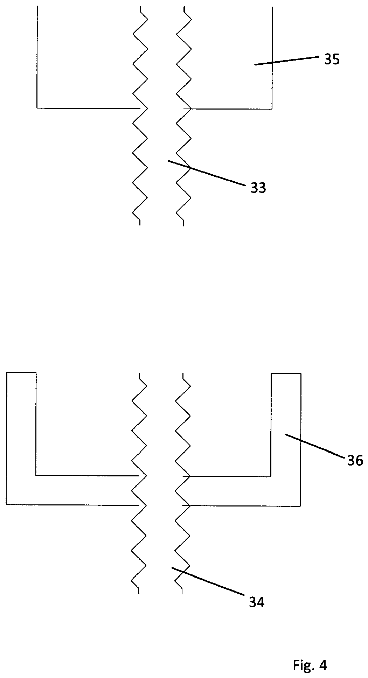

Fig. 4 zeigt eine mögliche Gestaltung von Anschlusselementen, mit der Baumodule oder auch einzelne Dosierkammern 2, 3 oder Überlaufkammern 5, 6 einem Pulverkreislauf bzw. entsprechenden Förderelementen zugeordnet werden können. Hierfür ist vorgesehen, dass die Anschlusselemente eine derartige Form aufweisen, dass ein Förderelement immer nur zu einer einzigen Dosierkammer2, 3 , Überlaufkammer 5, 6 oder einem Baumodul passt. Beispielsweise können das Förderelement ein Außengewinde 33 und die Dosierkammer 2, 3, Überlaufkammer 5, 6 oder sonstige Anschlussstellen ein Innengewinde 34 besitzen. Damit nun ein Förderelement beispielsweise des Pulverkreislaufs 23 nur an die Dosierkammer 3 oder ein entsprechendes Baumodul anschließbar ist, hat das Förderelement einen Umlaufring 35 mit einer quadratischen Grundfläche. An der Dosierkammer 3 etc. ist dagegen ein entsprechender Aufnahmering 36 vorgesehen, in den der Umlaufring 35 aufgrund der Formgebung hineinpasst. Weisen andere Förderelemente statt eines Umlaufrings mit quadratischem Querschnitt, beispielsweise einen Umlaufring mit dreieckigem, kreisförmigem, elliptischem oder sonst wie gestaltetem Querschnitt auf, so passen diese nicht in den Aufnahmering 36, sondern lediglich in entsprechend gestaltete Aufnahmeringe. Dadurch kann sichergestellt werden, dass die Pulverkreisläufe 23, 24 auch bei austauschbaren Baumodulen oder Dosierkammern 2, 3 immer getrennt bleiben.

**BEZUGSZEICHENLISTE**

| | | | |
|---|---|---|---|
| 1 | Lasersintervorrichtung | 20 | Nachfüllvorrichtung |
| 2 | Dosierkammer | 21 | Ableitung |
| 3 | Dosierkammer | 22 | Ableitung |
| 4 | Baukammer | 23 | Pulverkreislauf |
| 5 | Überlaufkammer | 24 | Pulverkreislauf |
| 6 | Überlaufkammer | 25 | Heizvorrichtung |
| 7 | Pulverrückgewinnungseinrichtung | 26 | Heizvorrichtung |
| 8 | Pulverrückgewinnungseinrichtung | 27 | Temperatursensor |
| 9 | Aufbaumaterial | 28 | Temperatursensor |
| 10 | Aufbaumaterial | 29 | Restsauerstoffsensor |
| 11 | Aufbringvorrichtung | 30 | Restsauerstoffsensor |
| 12 | Objekt | 31 | Dosierkammer |
| 13 | Ableitung | 32 | Dosierkammer |
| 14 | Ableitung | 33 | Außengewinde |
| 15 | Filter | 34 | Innengewinde |
| 16 | Filter | 35 | Umlaufring |
| 17 | Leitung | 36 | Aufnahmering |
| 18 | Leitung | 37 | Zuleitung |
| 19 | Nachfüllvorrichtung | 38 | Zuleitung |

## Patentansprüche

1. Vorrichtung (1) zum Herstellen von dreidimensionalen Objekten (12) durch aufeinanderfolgendes Verfestigen von Schichten eines mittels Strahlung verfestigbaren Aufbaumaterials (9, 10) an den dem jeweiligen Querschnitt des Objektes (12) entsprechenden Stellen, mit einem Gehäuse, einer darin untergebrachten Baukammer (4), einer Dosierkammer (2, 3), einer Überlaufkammer (5, 6), einer Aufbringvorrichtung (11) zum Aufbringen von Schichten des Aufbaumaterials (9, 10) und einem einen Bestandteil eines Aufbaumaterialtransportkreislaufs (23, 24) bildendes Förderelement (13, 17, 22, 38; 14, 18, 21, 37) zum Transportieren des Aufbaumaterials (9, 10), **dadurch gekennzeichnet, dass** wenigstens zwei Förderelemente zum Transport unterschiedlicher Aufbaumaterialien (9, 10) vorgesehen sind, die getrennte Zuleitungen (37, 38) zu wenigstens einer Dosierkammer (2, 3), umfassen, wobei entweder alle Elemente des Aufbaumaterialtransportkreislaufs (23, 34) redundant ausgelegt sind oder lediglich die Förderelemente (13, 17, 22, 38; 14, 18, 21, 37) redundant ausgelegt sind.

2. Vorrichtung nach Anspruch 1, **dadurch gekennzeichnet, dass** in der Vorrichtung (1) wenigstens zwei Dosierkammern (2, 3) vorgesehen sind und jede Dosierkammer (2, 3) über eine eigene Zuleitung (37, 38) verfügt.

3. Vorrichtung nach Anspruch 1, **dadurch gekennzeichnet, dass** in der Vorrichtung (1) wenigstens eine austauschbare Dosierkammer (2) vorgesehen ist, die mit wenigstens einer Zuleitung (37, 38) verbindbar ist.

4. Vorrichtung nach einem der Ansprüche 1 bis 3, **dadurch gekennzeichnet, dass** die Anschlusselemente der Dosierkammern (2, 3) insbesondere hinsichtlich ihrer Form derart ausgebildet sind, sodass jede Dosierkammer (2, 3) ausschließlich mit einer ihr zugeordneten Zuleitung (37, 38) verbindbar ist.

5. Vorrichtung nach einem der vorangehenden Ansprüche, **dadurch gekennzeichnet, dass** wenigstens zwei Förderelemente (13, 17, 22, 38; 14, 18, 21, 37) als Ableitungen, insbesondere von einer Überlaufkammer (5, 6) oder einer Dosierkammer (2, 3), ausgebildet sind.

6. Vorrichtung nach Anspruch 5, **dadurch gekennzeichnet, dass** in der Vorrichtung wenigstens zwei Überlaufkammern (5, 6) und/oder zwei Dosierkammern (2, 3) vorgesehen sind und jede Überlaufkammer (5, 6) und/oder Dosierkammer (2, 3) über eine eigene Ableitung (13, 14, 21, 22) verfügt.

7. Vorrichtung nach Anspruch 5, **dadurch gekennzeichnet, dass** in der Vorrichtung eine austauschbare Überlaufkammer (5) und/oder austauschbare Dosierkammer (2) vorgesehen ist, die mit einer Ableitung (13, 14, 21, 22) verbindbar ist.

8. Vorrichtung nach Anspruch 7, **dadurch gekennzeichnet, dass** die Anschlusselemente der Überlaufkammern (5, 6) und/oder Dosierkammern (2, 3) insbesondere geometrisch derart unterschiedlich ausgebildet sind, sodass jede Überlaufkammer (5, 6) und/oder Dosierkammer (2, 3) nur mit einer einzigen, ihr zugehörigen Ableitung (13, 14, 21, 22) verbindbar ist.

9. Vorrichtung nach einem der vorangehenden Ansprüche, **dadurch gekennzeichnet, dass** an wenigstens einem Förderelement (13, 14, 17, 22, 38; 14, 18, 21, 37) eine Sensoreinrichtung (27, 28, 29, 30) und/oder Aufbaumaterialbehandlungseinrichtung angeordnet ist.

10. Vorrichtung nach Anspruch 9, **dadurch gekennzeichnet, dass** an wenigstens einem Förderelement (13, 17, 22, 38; 14, 18, 21, 37) eine Heizvorrichtung (25, 26) und/oder eine Kühleinrichtung angeordnet ist.

11. Vorrichtung nach Anspruch 9 oder 10, **dadurch gekennzeichnet, dass** an wenigstens einem Förderelement (13, 17, 22, 38; 14, 18, 21, 37) ein Temperatursensor (27, 28) und/oder Drucksensor und/oder Restsauerstoffsensor (29, 30) angeordnet ist.

12. Vorrichtung nach einem der vorangehenden Ansprüche, **dadurch gekennzeichnet, dass** an oder in wenigstens einem Förderelement (13, 17, 22, 38; 14, 18, 21, 37) und/oder einer Pulverrückgewinnungseinrichtung (7, 8) ein aufbaumaterialspezifischer Filter (15, 16) angeordnet ist.

13. Vorrichtung nach einem der vorangehenden Ansprüche, **dadurch gekennzeichnet, dass** an wenigstens einem Förderelement (13, 17, 22, 38; 14, 18, 21, 37) ein Saugrohr angeordnet ist.

14. Vorrichtung nach einem der vorangehenden Ansprüche, **dadurch gekennzeichnet, dass** wenigstens ein Förderelement (13, 17, 22, 38; 14, 18, 21, 37) mit einer Pulverrückgewinnungseinrichtung (7, 8) verbindbar oder verbunden ist.

15. Vorrichtung nach einem der vorangehenden Ansprüche, **dadurch gekennzeichnet, dass** wenigstens ein Förderelement (13, 17, 22, 38; 14, 18, 21, 37) als Schlauch ausgebildet ist.

16. Vorrichtung nach einem der vorangehenden Ansprüche, **dadurch gekennzeichnet, dass** wenigstens ein Förderelement (13, 17, 22, 38; 14, 18, 21, 37) und/oder eine Pulverrückgewinnungseinrichtung und/oder eine Dosierkammer (2, 3) und/oder eine Nachfüllvorrichtung (19, 20) einen geschlossenen Pulverkreislauf bilden.

## Claims

1. Device (1) for the production of three-dimensional objects (12) by
successive consolidation of layers of a building material (9, 10) that can be consolidated by means of radiation at the points corresponding to the respective cross-section of the object (12), with a housing and a construction chamber (4) accommodated therein), a metering chamber (2, 3), an overflow chamber (5, 6), an application device (11) for applying layers of the building material (9, 10) and a conveying element (13, 17, 22, 38; 14, 18, 21, 37) forming part of a building material transport circuit (23, 24) for transporting the building material (9, 10), **characterized in that** at least two conveying elements
are provided for transporting
different building materials (9, 10), which have separate feed lines (37, 38) to at least one metering chamber (2, 3), wherein either all elements of the building material transport circuit (23, 34) are designed redundantly or only the conveyor elements (13, 17, 22, 38; 14, 18, 21, 37) are designed redundantly.

2. Device according to Claim 1, **characterized in that** at least
two metering chambers (2, 3) are provided in the device (1) and each metering chamber (2, 3) has its own supply line (37, 38).

3. Device according to Claim 1, **characterized in that** at least
at least one replaceable metering chamber (2) is provided in the device (1), which can be connected to at least one supply line (37, 38).

4. Device according to one of Claims 1 to 3, **characterized in that** the
connection elements of the metering chambers (2, 3) are designed in particular with regard to their shape so that each metering chamber (2, 3) can only be connected to a supply line (37, 38) assigned to it.

5. Device according to one of the preceding claims, **characterized in that** at least two conveyor elements (13, 17, 22, 38; 14, 18, 21, 37) are designed as discharges, in particular from an overflow chamber (5, 6) or a metering chamber (2, 3).

6. Device according to claim 5, **characterized in that** at least two overflow chambers (5, 6) and/or two metering chambers (2, 3) are provided in the device and each overflow chamber (5, 6) and/or metering chamber (2, 3) has its own discharge line (13, 14, 21, 22).

7. Device according to claim 5, **characterized in that** a replaceable overflow chamber (5) and/or replaceable metering chamber (2) is provided in the device, which can be connected to a discharge line (13, 14, 21, 22).

8. Device according to claim 7, **characterized in that** the connection elements of the overflow chambers (5, 6) and/or metering chambers (2, 3) are designed to be different in particular geometrically so that each overflow chamber (5, 6) and/or
metering chamber (2, 3) can only be connected to a single discharge line (13, 14, 21, 22) belonging to it.

9. Device according to one of the preceding claims, **characterized in that**
a sensor device (27, 28, 29, 30) and/or building material treatment device is arranged on at least one conveyor element (13, 14, 17, 22, 38; 14, 18, 21, 37).

10. Device according to Claim 9, **characterized in that** a heating device (25, 26) and/or a cooling device is arranged on at least one conveyor element (13, 17, 22, 38; 14, 18, 21, 37).

11. Device according to claim 9 or 10, **characterized in that** a
a temperature sensor (27, 28) and/or pressure sensor and/or residual oxygen sensor (29, 30) is arranged on at least one conveyor element (13, 17, 22, 38; 14, 18, 21, 37).

12. Device according to one of the preceding claims, **characterized in that**
a filter (15, 16) specific to the construction material is arranged on or in at least one conveying element (13, 17, 22, 38; 14, 18, 21, 37) and/or a powder recovery device (7, 8).

13. Device according to one of the preceding claims, **characterized in that** a suction pipe is arranged on at least one conveying element (13, 17, 22, 38; 14, 18, 21, 37).

14. Device according to any of the preceding claims, **characterized in that** at least one conveying element (13, 17, 22, 38; 14, 18, 21, 37) is connectable or connected to a powder recovery device (7, 8).

15. Device according to one of the preceding claims, **characterized in that** at least one conveying element (13, 17, 22, 38; 14, 18, 21, 37) is designed as a hose.

16. Device according to one of the preceding claims, **characterized in that** at least one conveying element (13, 17, 22, 38; 14, 18, 21, 37) and/or a powder recovery device and/or a dosing chamber (2, 3) and/or a refilling device (19, 20) form a closed powder circuit.

## Revendications

1. Dispositif (1) de fabrication d'objets tridimensionnels (12) par solidification les unes sur les autres de couches d'un matériau solidifiable au moyen d'un rayonnement (9, 10) aux lieux correspondant à la section respective de l'objet (12), avec un carter, une chambre de construction logée à l'intérieur (4), une chambre de dosage (2, 3), une chambre de débordement (5, 6), un dispositif d'application (11) pour appliquer des couches du matériau constitutif (9, 10) et un élément de transport (13, 17, 22, 38 ; 14, 18, 21, 37) faisant partie d'un cycle de transport de matériau constitutif (23, 24) pour transporter le matériau constitutif (9, 10), **caractérisé en ce que** sont prévus au moins deux éléments de transport de différents matériaux constitutifs qui comprennent des conduites d'alimentation séparées (37, 38) vers au moins une chambre de dosage (2 ,3), où soit tous les éléments du cycle de transport de matériau constitutif (23, 24) sont conçus redondants, soit seuls les éléments de transport (13, 17, 22, 38 ; 14, 18, 21, 37) sont conçus redondants.

2. Dispositif selon la revendication 1, **caractérisé en ce que** dans le dispositif (1) sont prévues au moins deux chambres de dosage (2, 3) et chaque chambre de dosage (2, 3) dispose d'une conduite d'alimentation (37, 38) en propre.

3. Dispositif selon la revendication 1, **caractérisé en ce que** dans le dispositif (1) est prévue au moins une chambre de dosage remplaçable (2) qu'il est possible de relier à au moins une conduite d'alimentation (37, 38).

4. Dispositif selon l'une des revendications 1 à 3, **caractérisé en ce que** les éléments de raccordement des chambres de dosage (2, 3) sont conçus, notamment du point de vue de leur forme, de sorte que chaque chambre de dosage (2, 3) puisse être liée exclusivement à une conduite d'alimentation (37, 38) allant dans sa direction.

5. Dispositif selon l'une des revendications précédentes, **caractérisé en ce qu'**au moins deux éléments de transport (13, 17, 22, 38 ; 14, 18, 21, 37) sont constitués comme des conduites de sortie, en particulier depuis une chambre de débordement (5, 6) ou une chambre de dosage (2, 3).

6. Dispositif selon la revendication 5, **caractérisé en ce que** dans le dispositif, au moins deux chambres de débordement (5, 6) et/ou deux chambres de dosage (2, 3) sont prévues et chaque chambre de débordement (5, 6) et/ou chambre de dosage (2, 3) dispose de sa propre conduite de sortie (13, 14, 21, 22).

7. Dispositif selon la revendication 5, **caractérisé en ce que** dans le dispositif, une chambre de débordement remplaçable (5) et/ou une chambre de dosage remplaçable (2) est prévue, qui peut être reliée à une conduite de sortie (13, 14, 21, 22).

8. Dispositif selon la revendication 7, **caractérisé en ce que** les éléments de raccordement des chambres de débordement (5, 6) et/ou des chambres de dosage (2, 3) sont de conceptions différentes, en particulier géométriquement, de sorte que chaque chambre de débordement (5, 6) et/ou chambre de dosage (2, 3) ne puisse être reliée qu'à une unique conduite de sortie (13, 14, 21, 22) qui lui soit propre.

9. Dispositif selon l'une des revendications précédentes, **caractérisé en ce qu'**à au moins un élément de transport (13, 17, 22, 38 ; 14, 18, 21, 37) est assigné un dispositif capteur (27, 28, 29, 30) et/ou un dispositif de traitement de matériau constitutif.

10. Dispositif selon la revendication 9, **caractérisé en ce qu'**à au moins un élément de transport (13, 17, 22, 38 ; 14, 18, 21, 37) est assigné un dispositif de chauffage (25, 26) et/ou un dispositif de refroidissement.

11. Dispositif selon la revendication 9 ou 10, **caractérisé en ce qu'**à au moins un élément de transport (13, 17, 22, 38 ; 14, 18, 21, 37) est assigné un capteur de pression et/ou un capteur d'oxygène résiduel (29, 30).

12. Dispositif selon l'une des revendications précédentes, **caractérisé en ce qu'**à ou dans au moins un élément de transport (13, 17, 22, 38 ; 14, 18, 21, 37) et/ou un dispositif de récupération de poudre (7, 8) est assigné un filtre spécifique au matériau constitutif (15, 16).

13. Dispositif selon l'une des revendications précédentes, **caractérisé en ce qu'**à au moins un élément de transport (13, 17, 22, 38 ; 14, 18, 21, 37) est assignée une conduite d'aspiration.

14. Dispositif selon l'une des revendications précédentes, **caractérisé en ce qu'**au moins un élément de transport (13, 17, 22, 38 ; 14, 18, 21, 37) est lié ou peut être lié à un dispositif de récupération de poudre (7, 8).

15. Dispositif selon l'une des revendications précédentes, **caractérisé en ce qu'**au moins un élément de transport (13, 17, 22, 38 ; 14, 18, 21, 37) est constitué sous forme de tuyau.

16. Dispositif selon l'une des revendications précédentes, **caractérisé en ce qu'**au moins un élément de transport (13, 17, 22, 38 ; 14, 18, 21, 37) et/ou un dispositif de récupération de poudre (7, 8) et/ou une chambre de dosage (2, 3) et/ou un dispositif de remplissage (19, 20) forme un cycle de poudre fermé.
